# EUROPEAN PATENT SPECIFICATION

(11) **EP 3 723 552 B1**
(45) Date of publication and mention of the grant of the patent: **09.04.2025**
(21) Application number: 18887789.8
(22) Date of filing: 27.11.2018
(51) Int. Cl.: A47C 4/03, F16B 12/12, F16B 12/22, A47C 4/02, F16B 12/24, F16B 12/26

(54) **CHAIR**
STUHL
CHAISE

(30) Priority: 11.12.2017 SE 1751520
(43) Date of publication of application: 21.10.2020
(73) Proprietor: Inter IKEA Systems B.V., 2616 LN Delft (NL)
(72) Inventor: ERIKSSON, Anders, 343 73 Virestad (SE); SJÖSTEDT, Göran, 283 96 Killeberg (SE)
(74) Representative: Ström & Gulliksson AB
(86) International application number: PCT/SE2018/051222
(87) International publication number: WO 2019/117780

(56) References cited:
- AU-A- 6 376 865
- DE-C- 365 461
- US-A- 1 674 220
- US-A- 2 460 027
- US-A- 2 534 413
- US-A- 202 505
- US-A- 515 382
- US-A1- 2010 254 757
- US-A1- 2014 205 373
- US-A1- 2014 205 373

## Description

### Field of invention

The invention relates to a chair comprising a first and a second section mutually displaced from each other to form a gap there between, and a first cross-member which is configured to connect with its first free end to the first section and with its second free end to the second section, thereby bridging the gap.

### Technical Background

Many different ways have been used throughout the years to join furniture parts to each other. AU 63768 65 A discloses a known chair with joint arrangements.

Often different types of mechanical fastening means are used. For furniture of the self-assembly type, it is important that the different furniture parts can be assembled to each other in a safe and relatively simple way. This is especially important when the customer is to assemble the furniture on his/her own. It is therefore always an aspiration to improve the joints between the different furniture parts. The improvements may concern the quality of the joint, i.e. how well the furniture parts are assembled to each other. They may also concern the manufacturing costs and ease of assembly. Another important aspect to consider is the handling of the furniture parts throughout the full distribution chain from factory to the customer. The parts should allow as small packages as possible to reduce packaging costs and transportation costs. Another aspect to consider is the robustness of the furniture. This is especially the case if the furniture is a chair which in many cases is not only used as a sitting furniture but also for a number of other situations where the chair often is subjected to a complex load with bending forces, e.g. when people balance on the rear pair of legs when sitting. This makes it essential to provide robust joints, However, such joints must not add to the complexity of the fastening means.

### Summary of invention

One object of the present invention is to provide a chair with joint arrangements for the parts which allows an easy assembling without the use of any tools or any mechanical fastening means.

The joint arrangements should be practical to use and yet give a secure assembly of the furniture.

The assembled chair should provide a high degree of robustness that can withstand the often very high forces that a chair may be subjected to.

It should also be possible to separate the furniture parts from each other after assembly, without harming the furniture parts.

These and other objects have been achieved by a chair according to claim 1.

The first and second sections may by way of example be the side sections of a chair, where each section comprises a front leg and a rear leg. It is also to be understood that the first and the second sections by using the same principle may form front and rear portions of a chair where the front portion comprises two front legs and the rear portion comprising two rear legs.

The respective section may be a pre-assembled unit where the section in addition to the legs also comprises one of the two columns configured to form a support for a back-rest of the chair.

By the first and second joint arrangements being made of male parts and female parts, configured to be arranged into an interlocking arrangement by a relative movement, no tools are required to assemble the chair. Also, the assembling may be made without the requirement of any substantial body strength. Also, the chair can be easy disassembled if required.

The dowels are preferably made by a solid material with a uniform cross-section. The term *"uniform cross-section"* should in the context of the invention be understood as a cross-section without any flexible zones, such as grooves having an extension in parallel with the longitudinal extension of the dowel. The uniform cross-section prevents undue flexibility of the dowel, thereby contributing to the robustness of the joint arrangement. Further, the dowels are preferably made by wood. Each of the first and the second joint arrangements comprises two male parts and two female parts. The provision of at least two of each type prevents the first cross-member from rotation in its mounted condition. Also, it reduces the risk of splitting the material in the first and second sections. This is especially the case if these sections are made of wood.

The use of rims and grooves allows an easy and speedy mounting which permits interlocked parts to be moved along a first direction while at the same time preventing the parts from being moved apart in second direction transverse the first direction. The number of rims may vary depending on expected loads on the chair. Also, the number of rims and their design may be used as an indicator to the operator of how to orient the parts during assembly.

The male parts of the first and second joint arrangements may be arranged in the first and the second free ends of the first cross-member, and the female parts of the first and the second joint arrangements may be arranged in the first and second sections of the chair. Thereby the first and second sections and the first cross-member may be arranged side by side in a flat package without any male parts projecting away from the major surface of such package.

One female part of the first and second joint arrangements respectively may be formed by a recess formed in the first surface of the first and second sections of the chair, and said recess may have an insertion portion and a locking portion; and one female part of the first and second joint arrangements respectively may be formed by a recess having a mouth formed in a second surface of the first and second sections of the chair, and the first and second surfaces may form an angle to each other.

By the mouth of the recess being arranged in the second surface, the first cross-member may be mounted to the first and second sections by a substantially linear movement in view of the respective section. In case of a seat panel later is to be arranged to the frame to abut the second surface, any such seat panel will close-off the mouth and not only visually hide the same, but also efficiently prevent displacement of the first cross-member. Thereby the thus formed chair will receive a very rigid form.

The chair comprises a second cross-member having first and second opposing free ends, the second cross-member being configured to connect with its first free end to the first section and with its second free end to the second section thereby bridging the gap; and a third joint arrangement configured to attach the first free end of the second cross-member to the first section and a fourth joint arrangement configured to attach the second free end of the second cross-member to the second section, wherein each of the third and fourth joint arrangements comprises: at least one male part being arranged on either a free end of the second cross-member or on the respective section; and at least one female part being arranged on the other one of the respective section and the second cross-member, wherein the at least one male part is formed by a dowel extending in a longitudinal direction and having a free end facing away from a surface of the free end of the second cross-member or a first surface of the respective section, said dowel comprising a locking means in the form of at least one rim extending radially from the envelope surface of the dowel; and wherein the at least one female part is formed by a recess in the respective section or in the surface of the free end of the second cross-member, the recess having an elongated extension and a locking portion and further comprising at least one groove corresponding to the shape of the at least one rim, whereby the second cross-member is configured to be moved relative to the first and second sections such that the dowels are moved along the elongated extension of the recesses to a locking position in the locking portions, in which locking position the at least one rim of the dowel engages the at least one groove of the recess.

Each of the third and fourth joint arrangements comprises two or more male parts and two or more female parts. The number of male parts should correspond to the number of female parts.

The second cross-member will together with the first and second sections and the first cross-member form a closed frame and thereby provide a structurally strong frame. The second cross-member may be arranged across the rear end of the chair just above the rear pair of legs. The first and second cross-members may form a support for a seat panel making up the seat of the chair.

The dowels are preferably made by a solid material with a uniform cross-section. The uniform cross-section prevents undue flexibility of the dowel, thereby contributing to the robustness of the joint arrangement. Further, the dowels are preferably made by wood.

The female parts of the third and fourth joint arrangements may be formed by recesses, each recess having an insertion portion and a locking portion.

The male parts of the third and fourth joint arrangements may be arranged in the first and in the second free ends of the second cross-member, and the female parts of the third and the fourth joint arrangements may be arranged in the first and in the second sections of the chair. The female parts may be arranged in the first surface of the respective first and second sections. The first surface may extend substantially orthogonally to the longitudinal extension of the cross-members.

The first and/or the second cross-members may comprise either male parts in both free ends thereof or female parts in both free ends thereof. The required package volume and hence package material may thereby be reduced since the male parts will extend in the longitudinal direction of the cross-members and not add to the volume of the package. Also, assembling of the chair is facilitated since the sections may be arranged resting on a solid support during mounting of the respective cross-members.

The first and second sections may together with the first and/or the second cross-member form a frame. The first and second sections of the frame may be arranged in parallel with each other.

The distances between the longitudinal center lines of the male parts of the first and second joint arrangements and the distances between the longitudinal center lines of the male parts of the third and fourth joint arrangements respective are smaller than eight times the longitudinal extension of each male part, and more preferred smaller than six times the longitudinal extension of each male part. The first and second cross-members do each have a substantially smaller height than length, and by arranging the male parts as close to the ends as possible as seen in the height direction, the robustness of the frame and hence the chair may be improved.

The chair may further comprise a seat panel configured to connect with the first section and the second section thereby bridging the gap; a seat panel joint arrangement configured to attach the seat panel to a second surface of the first and the second sections, the second surface forming an angle to the first surface of the respective section; wherein the seat panel joint arrangement comprises: at least two male parts, both being arranged either on a major surface of the seat panel or both being arranged on the first and the second sections with at least one of the male parts on each section; and at least two female parts, both being arranged on the other one of the major surface of the seat panel and the respective first and second section; wherein each of the male parts is formed by a dowel extending in a longitudinal direction and having a free end facing away from the first and second sections or from the major surface of the seat panel; wherein each of the female parts is formed by a recess in the major surface of the seat panel or in the first and second sections, the recess having an elongated extension between an insertion portion and a locking portion; whereby the first and the second sections and the seat panel are configured to be moved relative to each other such that the dowels are moved relative to the recesses in the longitudinal direction of respective dowel into the insertion portion and thereafter moved along the elongated extension of the recess to the locking portion.

The seat panel will add to the overall strength of the frame-like structure which is formed by the two sections and the at least one cross-member, by bridging and inter-connecting the two sections. The seat panel will prevent such frame from twisting. Further, the seat panel may fully or partly conceal the joint arrangements and also prevent the sections and the cross-members from falling apart. The first and second sections may by way of example be the side sections of a chair, where each section comprises a front leg and a rear leg and also one of the columns configured to form a support for a back-rest.

The male parts of the seat panel joint arrangement may be arranged in the first and second sections, and the female parts of the seat panel joint arrangement may be arranged in the major surface of the seat panel. The required package volume and hence the required package material may thereby be reduced since the male parts will extend in parallel with the major plane of such package. Also, there will be no projecting parts on the seat panel.

The recess of each female part of the seat panel joint arrangement may have an elongated extension in a direction transverse the gap between the first and second sections. The seat panel may thereby be mounted by a sliding movement across the gap and bridge the same.

The recesses of each female part of the seat panel joint arrangement may be arranged in a second surface of the first and second section, the second surface forming an angle α to the first surface. The seat panel will thereby, when mounted, visually hide the mouth of one of the female parts forming part of the first joint arrangement. The seat panel will also efficiently prevent displacement of the first and/or second cross-members in view of the first and second sections. Also, it will contribute to the provision of a structural rigidity of the frame-like structure which is formed by the first and the second sections and the first and second cross-members. When mounting the seat panel to the frame by pushing the seat panel rearwards towards the second cross-member into the locking position, the seat panel will due to a wedge action caused by the angle α, actively force the at least two male parts of the second cross-member towards into a locking engagement with the female parts in the first and the second sections.

The male parts of the first, second, third and fourth joint arrangements may have a longitudinal extension extending substantially perpendicularly to the longitudinal extension of the male parts of the seat panel joint arrangements. This allows building of a structure with a substantially orthogonal wall structure.

The seat panel joint arrangement may comprise at least three male parts and at least three female parts, and the at least three male parts and the at least three female parts respectively may be arranged to define a polygon.

At least one male part in the seat panel joint arrangement may comprise a locking means in the form of at least one rim extending radially from the envelope surface of the male part, and wherein a recess of the corresponding female part in the seat panel joint arrangement may comprise at least one corresponding groove, whereby in said locking position, the at least one rim of the male part is configured to engage the at least one corresponding groove of the female part.

The chair may comprise a locking means arranged in the lower surface of the seat panel, wherein the locking means, in a condition when the seat panel has been mounted to the frame, engages the frame, thereby preventing the seat panel from being displaced in view of the frame. In a condition when the seat panel has been mounted to the frame, the rear end of the seat panel may be configured to abut a portion of a back rest of the chair, while the locking means may be configured to abut the first cross member. The seat panel is thereby prevented from being displaced in view of the frame in the depth direction Y. Further, an overall robustness of the chair is provided for.

An upper edge of the second cross-member that is configured to face the seat panel may be provided with an angle α of 2-10 degrees towards the interior of the frame F. Thereby, when mounting the seat panel to the frame F by pushing the seat panel rearwards towards the second cross-member into the locking position, the seat panel will due to a wedge action caused by the angle α, actively force the at least two male parts of the second cross-member into a locking engagement with the female parts in the first and the second sections. This will add to the overall robustness of the chair.

Preferred embodiments appear in the dependent claims and in the description.

### Brief description of the drawings

The invention will by way of example be described in more detail with reference to the appended schematic drawings, which show a presently preferred embodiment of the invention.
Figs. 1A-1E disclose the mounting of first and second cross-members to a first section of a chair.
Figs. 2A-2B disclose the mounting of the first and second cross-members to the second section of a chair by means of the first joint arrangement.
Figs. 3A-3C disclose the mounting of the second cross-member by means of the third joint arrangement.
Fig. 4 discloses one example of a seat panel joint arrangement.
Figs. 5A-5C schematically disclose the operation of the seat panel joint arrangement.

### Detailed description of preferred embodiments

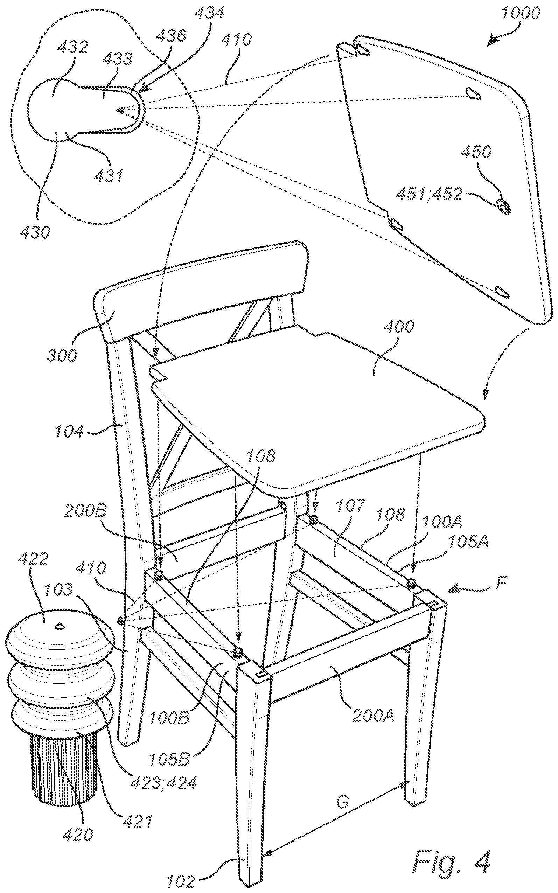

In the following the invention will be described with reference to Fig. 4 disclosing a chair 1000. The chair 1000 comprises a first section 100A and a second section 100B forming sides of the chair 1000, a first cross-member 200A, a second cross-member 200B, a back rest 300 and a seat panel 400.

Each section 100A, 100B comprises a front leg 102, a rear leg 103 and an extension 104 forming part of the back rest 300. The front leg 102 and the rear leg 103 in each section 100A, 100B are interconnected by at least one intermediate support 105A, 105B. In the disclosed embodiment, two intermediate supports 105A, 105B are arranged, of which the upper most will form part of a support for the seat panel 400.

The first and second sections 100A, 100B may be provided as two pre-assembled units. The first and second sections 100A, 100B may be mirrored.

The first and the second sections 100A, 100B are mutually displaced from each other to form a gap G there between. The gap G is bridged by the first and the second cross-members 200A, 200B and by the seat panel 400.

When mounted together, the first and second sections 100A, 100B and the first and second cross-members 200A, 200B form a frame F.

The first and the second sections 100A, 100B and also the first and the second cross-members 200A, 200B do each have a first surface 107 and a second surface 108. The first surface 107 is arranged to face the interior of the frame F. The second surface 108 may be arranged to form a top surface configured to support the seat panel 400. The first and the second surfaces 107, 108 form an angle to each other, such as 90 degrees.

The first and second sections 100A, 100B may be provided to the consumer as two pre-assembled units.

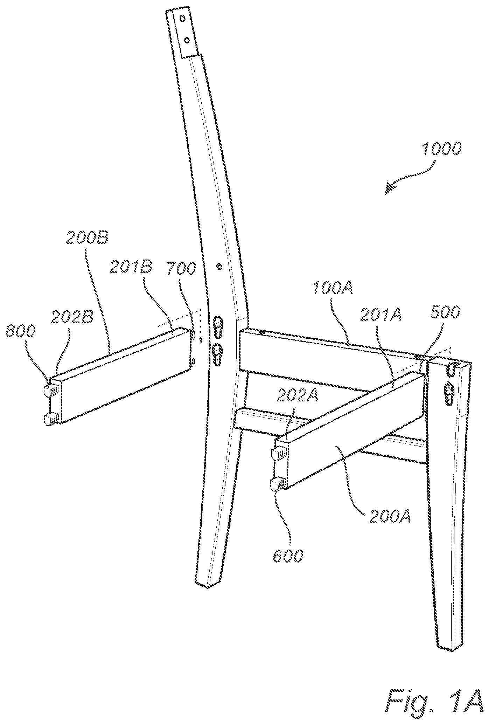

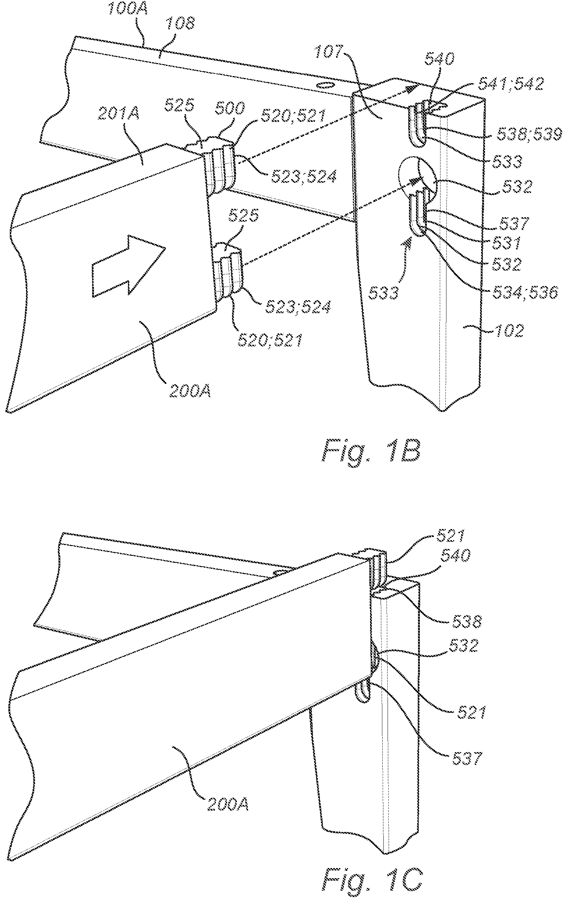

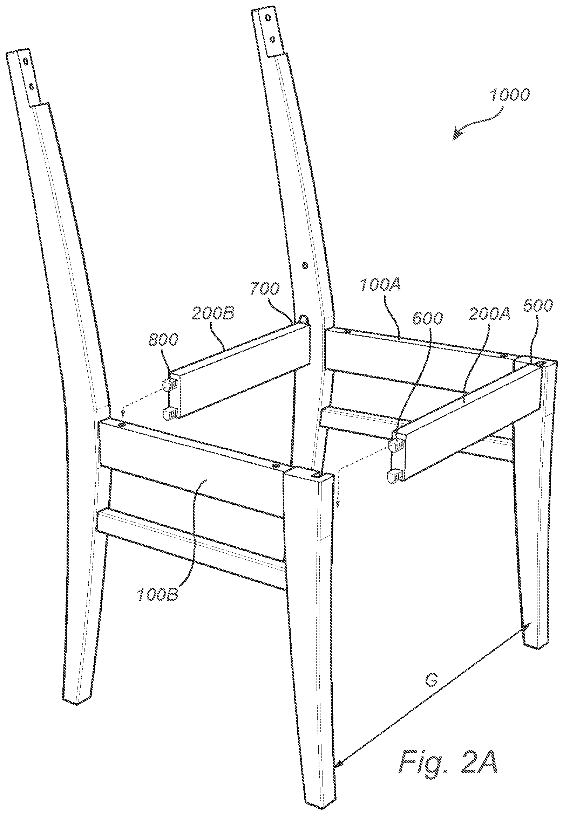

Now turning to Figs. 1A and 2A, the mounting of the first and the second cross-members to the first and second seconds 100A, 100B will be discussed.

The first cross-member 200A comprises in its first free end 201A a first joint arrangement 500 configured to attach the first free end 201A to the first section 100A and in its second free end 202A a second joint arrangement 600 configured to attach the second free end 201B to the second section 100B. Thereby, the first cross-member 200A will in its mounted position bridge the gap G between the two sections 100A, 100B.

The first and the second joint arrangements 500, 600 are identical whereby only the first joint arrangement 500 will be described in detail.

Now turning to Fig. 1B, the first joint arrangement 500 comprises two male parts 520 which are arranged in the first and the second free ends 201A, 202A of the first cross-member 200A. It is to be understood that more than two male parts 520 in each free end 201A, 202A may be used.

Each male part 520 is formed as a dowel 521 which comprises a locking means 523 in the form of at least one rim 524 which extends radially from the envelope surface of the dowel 521. In the disclosed embodiment, three rims 524 are arranged, one after the other as seen along the longitudinal extension of the dowel 521.

The dowel 521 is provided with a beveled surface 525 having an extension in parallel with the longitudinal extension of the dowel 521. The beveled surface 525 may be in parallel with the second surface 108 of the first section 100A. Other cross-sections are possible. By way of example, the dowel 521 may have a circular or an oval cross section as seen transverse its longitudinal extension. The dowel 521 is made by a solid material with a uniform cross-section. Also, the dowel 521 is made by wood.

The first joint arrangement 500 further comprises two female parts 537, 538 which are arranged in the first section 100A. In the disclosed embodiment the female parts 537, 538 are arranged in the front leg 102.

The lower female part 537 is formed by a recess 531 which is formed in the first surface 107 of the first and second sections 100A, 100B. The lower recess 531 has an elongated extension with an insertion portion 532 and a locking portion 533.

The insertion portion 532 has a cross-section that allows the dowel 521 to be inserted by a longitudinal movement. The inner wall of the insertion portion 532 may be smooth. The insertion portion 532 merges with the locking portion 533. The envelope surface of the inner wall 534 of the locking portion 533 comprises at least one groove 536 configured to receive the at least one rim 524 of the corresponding dowel 521 to be inserted thereto. The number of grooves 526 should thus correspond to the number of rims 524 on the corresponding dowel 521.

The upper female part 538 is formed by a recess 539 having an elongated extension. The recess 539 has a mouth 540 which is formed in the second surface 108 of the first section 100A and which merges into a locking portion 533. The mouth 540 has a cross section that allows insertion of the corresponding dowel 521. The envelope surface of the inner wall 541 of the recess 539 comprises at least one groove 542 configured to receive the at least one rim 524 of the corresponding dowel 521 to be inserted thereto. The number of grooves 542 should thus correspond to the number of rims 524 on the corresponding dowel 521.

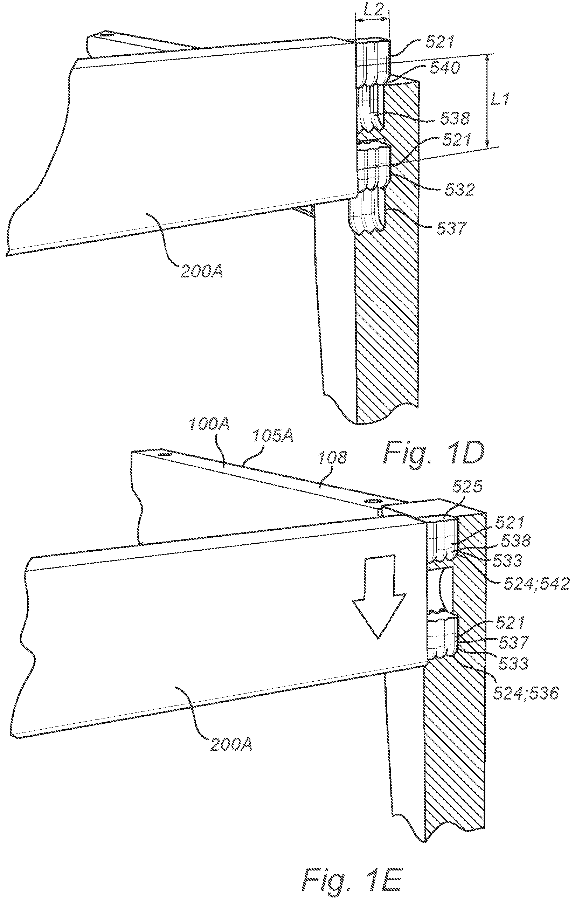

When mounting the first cross-member 200A to the first section 100A, see Figs. **1B-1D****,** the first cross-member 200A is displaced in view of the first section 100A so that the upper dowel 521 is arranged above the mouth 540 of the upper recess 538 and so that the lower dowel 521 is aligned with the insertion portion 532 of the lower recess 537. The first cross-member 200A is then moved relative to the first section 100A, see Fig. 1D-1E such that the dowels 521 are moved along the elongated extension of the recesses 537, 538 to the locking portions 533. As a result of this movement, the rims 524 of the dowels 521, see Fig. **1E****,** will lockingly engage the grooves 536, 542 of the recesses 537, 538 and prevent the first cross-member 200A from being displaced in view of the first section 100A as seen in the longitudinal extension of the first cross-member 200A. The same operation is then repeated for the second section 100B so that the opposing free ends of the first cross-member 200A will lockingly engage the first and the second sections 100A, 100B.

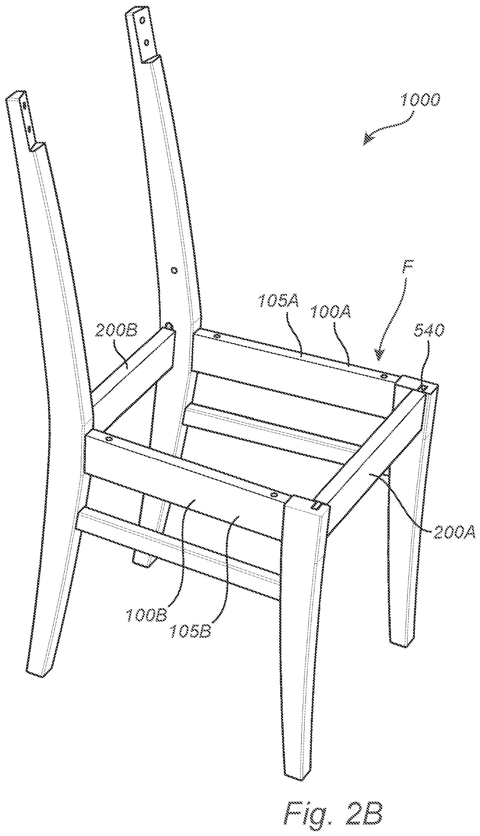

As a result of the beveled surface 525 of at least the upper dowel 521, the beveled surface 525 will be flush with the second surfaces 108 of the first and second sections 100A, 100B, see Fig. 1E and 2B. Thereby the first and second sections 100A, 100B together with the first and second intermediate supports 105A, 105B form a substantially flat support surface for e.g. a seat panel 400 to be mounted thereto.

Now turning to Figs. 1A and 2A anew, the chair 1000 further comprises the second cross-member 200B. The second cross-member 200B comprises first and second opposing free ends **201B,** 202B.

A third joint arrangement 700 is configured to attach the first free end 201B of the second cross-member 200B to the first section 100A and the fourth joint arrangement 800 is configured to attach the second free end 202B of the second cross-member 200B to the second section 100B, thereby bridging the gap G.

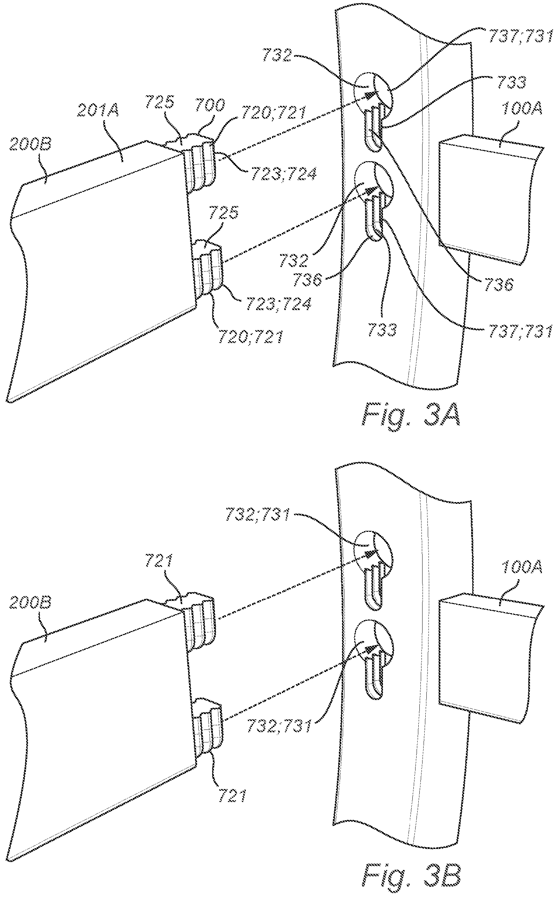

The third and the fourth joint arrangements 700, 800 are identical whereby only the first joint arrangement will be described in detail with reference to Figs. 3A-3C.

The third joint arrangement 700 is disclosed as comprising two male parts 720 which are arranged in the first and the second free ends **201B,** 202B of the second cross-member 200B. It is also to be understood that more than two male parts 720 in each free end may be used.

Each male part 720 may be formed as a dowel 721 which comprises a locking means 723 in the form of at least one rim 724 which extends radially from the envelope surface of the dowel 721. In the disclosed embodiment, three rims 724 are arranged one after the other as seen along the longitudinal extension of the dowel 721. The dowel 721 has the same cross section as that in the first and second joint arrangements 500, 600, i.e. it is provided with a beveled surface 725 having an extension in parallel with the longitudinal extension of the dowel 721. It is to be understood that other cross sections are possible, such as a circular or oval cross section. The dowel 721 is made by a solid material with a uniform cross-section. Also, the dowel 721 is made by wood.

The third joint arrangement 700 further comprises two female parts 737 which are arranged in the first section 100A. The two female parts 737 may be identical. The design of the two female parts 737 may be identical with the lower female part 537 in the first joint arrangement 500. The number of female parts 737 should correspond to the number of male parts 720 in the third joint arrangement 300. Correspondingly, more than two female parts 737 may be used in each free end may be used.

Each female part 737 is formed by a recess 731 which is formed in the first surface 107 of the first section 100A. The recess 731 has an elongated extension with an insertion portion 732 and a locking portion 733.

The insertion portion 732 has a cross-section that allows the dowel 721 to be inserted by a longitudinal movement. The inner wall of the insertion portion 732 may be smooth. The insertion portion 732 merges with the locking portion 733. The envelope surface of the inner wall of the locking portion 733 comprises at least one groove 736 configured to receive the at least one rim 724 of the corresponding dowel 721 to be inserted thereto. The number of grooves 736 should thus correspond to the number of rims 724 on the corresponding dowel 721.

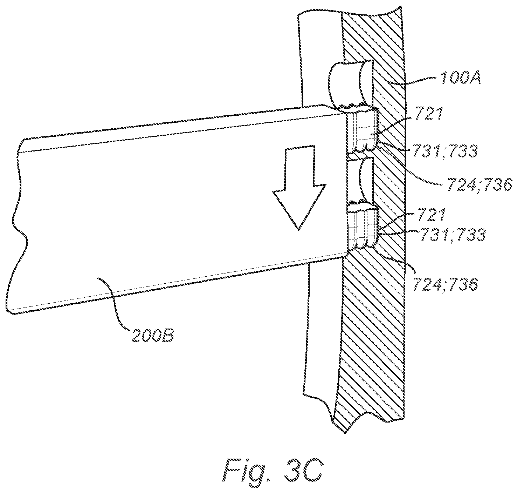

When mounting the second cross-member 200B to the first section 100A, see Fig. 3B, the second cross-member 200B is arranged in view of the first section 100A so that the dowels 721 are aligned with the insertion portions 732 of the two recesses 731. Thereafter, the second cross-member 200B is moved relative to the first section 100A such that the dowels 721 are moved along the elongated extension of the recesses 731 to the locking portions 733, see Fig 3C. As a result of this movement, the rims 724 of the dowels 721 will lockingly engage the grooves 736 of the recesses 731 and prevent the second cross-member 200B from being displaced in view of the first section 100A as seen in the longitudinal extension of the first cross-member. The locking principle is the same as that previously disclosed in Figs. 1B-1E. The same operation is then repeated for the second section 100B with the result that the opposing free ends 201B, 202B of the second cross-member 200B lockingly engage the first and the second sections 100A, 100B.

As is illustrated in Fig. 1D, the distance between the longitudinal center lines L1 of the male parts 521 of the first and second joint arrangements 500, 600 may be smaller than eight times the longitudinal extension L2 of each male part 521, and more preferred smaller than six times the longitudinal extension of each male part. This may also apply to the male dowels of the third and fourth joint arrangements 700, 800. The first and second cross-members 200A, 200B do each have a substantially smaller height than length, and by arranging the male parts as close to the ends as possible as seen in the height direction, the robustness of the frame F and hence the chair 100 may be improved.

As is best seen in Fig. 2B, the first and second sections 100A, 100B together with the first and optionally also the second cross-member 200A, 200B form a frame F. The frame F is suitable to support the seat panel 400 forming a seat of the chair.

Now turning to Fig. 4, the seat panel 400 is configured to be attached to the first and second sections 100A, 100B by a seat panel joint arrangement 410. The disclosed seat panel joint arrangement 410 comprises four male parts 420 and four female parts 430. Two of the male parts 420 are arranged in the second surface 108 of the first intermediate support 105A and two of the male parts 420 are arranged in the second surface 108 of the second intermediate support 105B. One male part 420 is positioned adjacent the front leg 102 and one mail part 420 is positioned adjacent to the rear leg 103. The four female parts 430 are all arranged in corresponding positions in a bottom surface of the seat panel 400.

The seat panel joint arrangement 410 should preferably comprise at least two male parts 420, both being arranged either on a major surface of the seat panel 400 or both being arranged on the intermediate supports 105A, 105B with at least one of the male parts 420 arranged on each intermediate support 105A, 105B. It goes without saying that more than four male parts 420 and more than four female parts 430 may be used. It is to be understood that the male parts 420, with remained function may be arranged in the first and the second sections 100A, 100B.

Each of the male parts 420 is formed by a dowel 421 extending in a longitudinal direction and having a free end 422 facing away from the second surface 108 of the intermediate supports 105A, 105B. The dowel 421 comprises a locking means 423 in the form of at least one rim 424 which extends radially from the envelope surface of the dowel 421. In the disclosed embodiment, three rims 424 are arranged, one after the other as seen along the longitudinal extension of the dowel 421. The respective dowel 421 may have circular cross section. It is to be understood that other cross sections are possible. The respective dowel 421 is made by a solid material with a uniform cross-section. Also, the respective dowel 421 is made by wood.

Each of the female parts 430 is formed by a recess 431. The recess 431 is arranged in the lower major surface of the seat panel 400. The recess 431 has an elongated extension between an insertion portion 432 and a locking portion 433. The elongated extension extends in a direction transverse the gap G between the first and second sections 100A, 100B. The insertion portion 432 has a cross-section that allows the dowel 421 to be inserted by a longitudinal movement. The inner wall 434 of the insertion portion 432 may be smooth. The insertion portion 432 merges with the locking portion 433. An envelope surface of the inner wall 434 of the locking portion 433 comprises at least one groove 436 configured to receive the at least one rim 424 of the corresponding dowel 421 to be inserted thereto. The number of grooves 436 should thus correspond to the number of rims 424 on the corresponding male part 420.

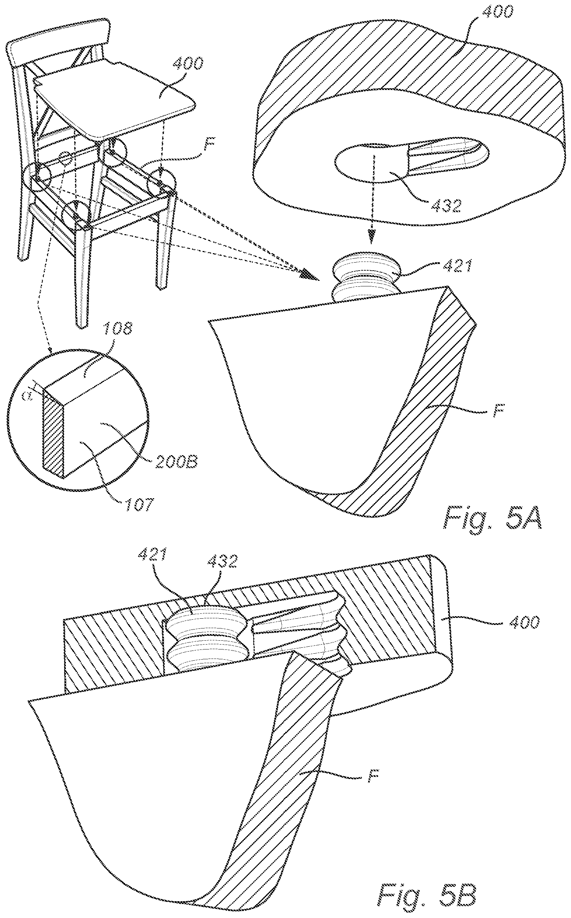

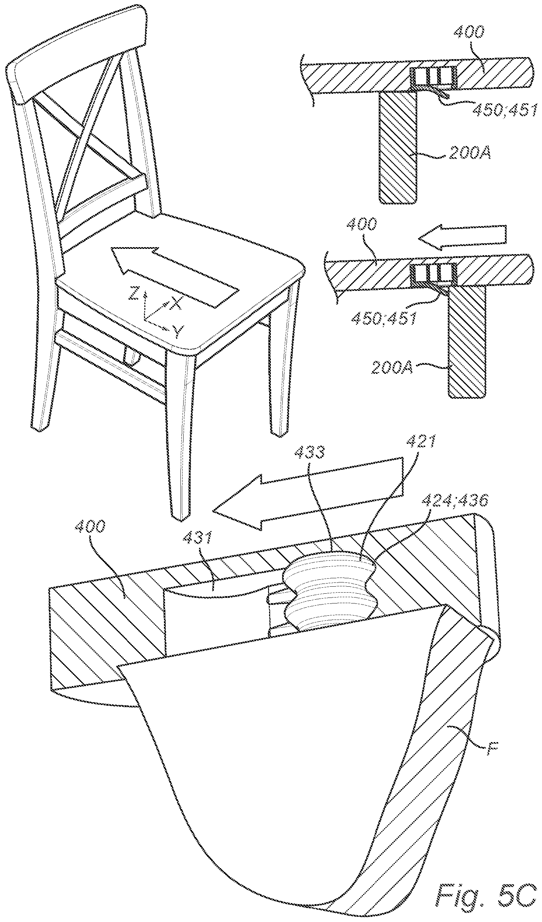

Now turning to Figs. 5A-5C, when mounting the seat panel 400 it is positioned above the frame F in a position where the longitudinal extension of the dowels 421 is aligned with the insertion portion 432 of the recesses 431, see Fig. 5A The seat panel 400 is then lowered so that the dowel 421 is moved relative to the recess 431 in the longitudinal direction of the dowel 421 into the insertion portion 432, see Fig. 5B. The seat panel 400 is thereafter moved, see Fig. 5C along the elongated extension of the recess 431 to the locking portion 433. As a result of this movement, the rims 424 of the dowel 421 will lockingly engage the grooves 436 of the recess 431 and prevent the seat panel 400 from being lifted in view of the frame F.

By the frame F and seat panel 400 being configured to be moved relative to each other such that the dowels 421 are moved relative to the recesses 431 in the longitudinal direction of respective dowel 421 into the insertion portion 432 of the respective recess 431 and thereafter moved along the elongated extension to the locking portion 433 of the respective recess 431, the seat panel 400 will be locked to the frame F in three directions - in the depth direction Y of the seat panel 400 and also in the width direction X transverse the depth direction Y of the seat panel 400 and in the vertical direction Z. This interlocking is provided for without requiring any tooling or mechanical locking means such as screws and brackets. The three-dimensional interlocking will provide a very robust constructional design which may be used for a wide variety of furniture and parts thereof. Thus, the inventive idea may be applied to other types of furniture than a chair.

The lower surface of the seat panel 400 may be provided with a locking means 450 that after mounting of the seat panel 400 to the frame F prevents the seat panel 400 from being displaced in the depth direction Y in view of the frame F. The locking means may be provided in many forms, one of them being disclosed in Figs. 4 and 5C. In the disclosed embodiment, the locking means 450 is provided as a flexible tongue 451 that is arranged in the front end of the lower surface of the seat panel 400. The flexible tongue 451 has a free, projecting edge 452 which in its un-loaded condition projects away from the lower surface of the seat panel 400. As discussed above with reference to Fig. 5C, when the seat panel 400 is mounted to the frame F, the seat panel 400 is lowered so that the dowel 421 is moved relative to the recess 431 in the longitudinal direction of the dowel 421 into the insertion portion 432, and then the seat panel 400 is moved along the elongated extension of the recess 431 to the locking portion 433. During the movement, the flexible tongue 451 will be moved past the first cross-member 200A. As the flexible tongue 451 passes the first-cross-member 200A, the flexible tongue 451 will be temporarily pressed downwardly, and as the first cross-member 200A has been passed it will flex back to its unloaded condition in which it prevents the seat panel 400 from being moved in the opposite direction by abutting the first cross member 200A.

As is best seen in Figs. 4 and 5C, in a condition when the seat panel 400 has been mounted to the frame F, the rear end of the seat panel 400 is configured to abut the extension 104 forming part of the back rest 300, while the locking means 450 in the front end of the seat panel abuts the first cross member 200A. The seat panel 400 is thereby prevented from being displaced in view of the frame F in the depth direction Y.

In an alternative, non-disclosed embodiment, the flexible tongue 451 may be received in a non-disclosed recess in the first cross-member 200A, thereby preventing the seat panel 400 from being displaced in the depth direction Y and in the vertical direction Z.

To further improve the robustness of the chair 1000, it is preferred that the upper edge of the second cross-member 200B that is configured to face the seat panel 400 is provided with a small angle α of 2-10 degrees towards the interior of the frame F, see Fig. 5A. The α is formed between the second surface 108 and the first surface 107 of the second cross member 200B. When mounting the seat panel 400 to the frame F by pushing the seat panel 400 rearwards towards the second cross-member 200B into the locking position, the seat panel 400 will due to a wedge action caused by the angle α, actively force the at least two male parts 720 of the second cross-member into a locking engagement with the female parts 737 in the first and the second sections 100A, 100B.

In the embodiment disclosed in Fig. 4 and Figs. 5A-5C, the at least two male parts 420 are arranged in the first and the second intermediate supports 105A, 105B of the frame F and the at least two female parts 430 are arranged in the major surface of the seat panel 400. It is to be understood that the opposite position may be applied with remained function. It is to be understood that the at least two male parts 420 alternatively or additionally may be arranged in the first and second sections 100A, 100B and in the first and/or second cross members 200A, 200B.

Depending on the design of the chair and the type thereof, the first section 100A and the second section 100B forming part of the frame F may be arranged in parallel with each other. Also, the first and the second cross members 200A, 200B may be arranged in parallel with each other

In one, non-disclosed embodiment, the seat panel joint arrangement may comprise at least three male parts and at least three female parts, where the at least three male parts and the at least three female parts respectively are arranged to define a polygon.

It is contemplated that there are numerous modifications of the embodiments described herein, which are still within the scope of the invention as defined by the appended claims.

The first and the second sections 100A, 100B have been described and illustrated as forming side portions of a chair. It is also to be understood that the first and the second sections by using the same principle may form front and rear portions of a chair.

The male parts of the first, second, third and fourth joint arrangements have been disclosed as being arranged on the two opposing free ends of the first and second cross-members and the female parts have been disclosed as being arranged in the first surfaces of the first and second sections. It is to be understood that the positions may be shifted with remained function.

The first and/or the second cross-members 200A, 200B may comprise either male parts in both free ends thereof or female parts in both free ends thereof. It is however preferred that the male parts are arranged in both the free ends.

The male parts of the seat panel joint arrangement are preferably arranged in the first and second sections, and the female parts of the seat panel joint arrangement are preferably arranged in the major surface of the seat panel. As a result thereof, the sections, the cross-members and the seat panel may be arranged side by side in a flat package without any male parts projecting away from the major surface of the package.

The positions of the male and female members may be altered with remained function. In that case, the recesses of each female part of the seat panel joint arrangement are arranged in the second surface of the first and second sections.

The different parts making up the chair, i.e. the sections, the cross-members and the seat panel may be made by wood, plastics or a composite material. Different materials may be used for the different parts or different portions of the parts.

The male parts of the seat panel 400 may be made by a composite material and are preferably made by injection molding a plastics material.

The female parts, i.e. the recesses may be formed directly into the material by a cutting tool. The recesses may also be formed in inserts that are inserted into the material of the different parts making up the chair. Such inserts may be provided by injection molding a plastics material.

## Claims

1. A chair comprising
a first section (100A) and a second section (100B) mutually displaced from each other to form a gap (G) there between,
a first cross-member (200A) and a second cross-member (200B) having first and second opposing free ends (201A, 202A, 201B, 202B), the first cross-member (200A) being configured to connect with its first free end (201A) to the first section (100A) and with its second free end (202A) to the second section (100B), thereby bridging the gap (G), and the second cross-member (200B) being configured to connect with its first free end (201B) to the first section (100A) and with its second free end (202B) to the second section (100B), thereby bridging the gap (G),
a first joint arrangement (500) configured to attach the first free end (201A) of the first cross-member (200A) to the first section (100A), a second joint arrangement (600) configured to attach the second free end (202A) of the first cross-member (200A) to the second section (100B), a third joint arrangement (700) configured to attach the first free end (201B) of the second cross-member (200B) to the first section (100A), and a fourth joint arrangement (800) configured to attach the second free end (202B) of the second cross-member (200B) to the second section (100B),
wherein each of the first and second joint arrangements (500, 600) comprises:
at least two male parts (520) being arranged on either a free end (201A) of the first cross-member (200A) or on the respective section (100A, 100B); and
at least two female parts (537, 538) being arranged on the other one of the respective section (100B, 100A) and the first cross-member (200A);
wherein each of the third and fourth joint arrangements (700, 800) comprises:
at least two male parts (720) being arranged on either a free end (201B, 202B) of the second cross-member (200B) or on the respective section (100A, 100B); and
at least two female parts (737) being arranged on the other one of the respective section (100A, 100B) and the second cross-member (200B),
wherein each male part (520, 720) is formed by a dowel (521, 721) extending in a longitudinal direction and having a free end facing away from a surface of the free end (201A, 202A, 201B, 202B) of the first or second cross-member (200A, 200B) or a first surface (107) of the respective section (100A, 100B), said dowel (521, 721) comprising a locking means in the form of at least one rim (524, 724) extending radially from the envelope surface of the dowel (521, 721); and
wherein each female part (537, 538, 737) is formed by a recess (531, 539, 731) in the respective section (100A, 100B) or in the surface of the free end (201A, 202A, 201B, 202B) of the first or second cross-member (200A, 200B), the recess (531, 539, 731) having an elongated extension and a locking portion (533, 733) and further comprising at least one groove (536, 736) corresponding to the shape of the at least one rim (524, 724),
whereby the first and second cross-members (200A, 200B) are configured to be moved relative to the first and second sections (100A, 100B) such that the dowels (521, 721) are moved along the elongated extension of the recesses (531, 539, 731) to a locking position in the locking portions (533, 733), in which locking position, the at least one rim (524, 724) of the dowel (521, 721) engages the at least one groove (536, 736) of the recess (531, 539, 731),
wherein the distances between the longitudinal center lines (L1) of the male parts (520) of the first and second joint arrangements (500, 600) and the distances between the longitudinal center lines of the male parts (720) of the third and fourth joint arrangements (700, 800) are smaller than eight times the longitudinal extension (L2) of each male part (520, 720).

2. The chair according to claim 1, wherein the male parts (520) of the first and second joint arrangements (500, 600) are arranged in the first and the second free ends (201A, 202A) of the first cross-member (200A), and wherein the female parts (537, 538) of the first and the second joint arrangements (500, 600) are arranged in the first and second sections (100A, 100B) of the chair.

3. The chair according to any of claims 1-2, wherein one female part (537) of the first and second joint arrangement (500, 600) respectively is formed by a recess (531) formed in the first surface (107) of the first and second sections (100A, 100B) of the chair, and wherein said recess (531) has an insertion portion (532) and a locking portion (533),
and wherein one female part (538) of the first and second joint arrangement (500, 600) respectively is formed by a recess (539) having a mouth (540) formed in a second surface (108) of the first and second sections (500, 600) of the chair, and
wherein the first and second surfaces (107, 108) are forming an angle to each other.

4. The chair according to any one of the preceding claims, wherein the male parts (720) of the third and fourth joint arrangements (700, 800) are arranged in the first and in the second free ends (201B, 202B) of the second cross-member (200A), and wherein the female parts (737) of the third and the fourth joint arrangements (700, 800) are arranged in the first and in the second sections (100A, 100B).

5. The chair according to any one of the preceding claims, wherein the first and/or the second cross-members (200A, 200B) comprise either male parts (720) in both free ends (201A, 202A; 201B, 202B) thereof or female parts (737) in both free ends thereof (201A, 202A; 201B, 202B).

6. The chair according to any one of the preceding claims, wherein the first and second sections (100A, 100B) together with the first and/or the second cross-member (200A, 200B) together form a frame (F).

7. The chair according to any of the preceding claims, wherein the distance between the longitudinal center lines (L1) of the male parts (520) of the first and second joint arrangements (500, 600) and/or the male parts (720) of the third and fourth joint arrangements (700, 800) is smaller than six times the longitudinal extension (L2) of each male part (520, 720).

8. The chair according to any of the preceding claims, further comprising a seat panel (400) configured to connect with the first section (100A) and the second section (100B) thereby bridging the gap (G),
a seat panel joint arrangement (410) configured to attach the seat panel (400) to a second surface (108) of the first and the second sections (100A, 100B), the second surface (108) forming an angle to the first surface (107) of the respective section (100A, 100B),
wherein the seat panel joint arrangement (410) comprises:
at least two male parts (420), both being arranged either on a major surface of the seat panel (400) or both being arranged on the first and the second sections (100A, 100B) with at least one of the male parts (420) on each section (100A, 100B); and
at least two female parts (430), both being arranged on the other one of the major surface of the seat panel (400) and the respective first and second section (100a, 100B),
wherein each of the male parts (420) is formed by a dowel (421) extending in a longitudinal direction and having a free end (422) facing away from the first and second sections (100A, 100B) or from the major surface of the seat panel (400),
wherein each of the female parts (430) is formed by a recess (431) in the major surface of the seat panel (400) or in the first and second sections (100A, 100B), the recess (431) having an elongated extension between an insertion portion (432) and a locking portion (433),
whereby the first and the second sections (100A, 100B) and the seat panel (400) are configured to be moved relative to each other such that the dowels (421) are first moved relative to the recesses (431) in the longitudinal direction of respective dowel (421) into the insertion portion (432), and the dowels (421) are thereafter moved along the elongated extension of the recess (431) into the locking portion (433).

9. The chair according to claim 8, wherein the male parts (420) of the seat panel joint arrangement (410) are arranged in the first and second sections (100A, 100B), and wherein the female parts (430) of the seat panel arrangement (410) are arranged in the major surface of the seat panel (400).

10. The chair according to any of claims 8 or 9, wherein the recess (431) of each female part (430) of the seat panel joint arrangement (410) has an elongated extension in a direction transverse the gap (G) between the first and second sections (100A, 100B).

11. The chair according to any of claims 8 or 10, wherein the recesses (431) of each female part (430) of the seat panel joint arrangement (410) are arranged in a second surface (108) of the first and second section (100A, 100B), the second surface (108) forming an angle α to the first surface (107).

12. The chair according to any of the preceding claims and including at least claim 8, wherein the male parts of the first, second, third and fourth joint arrangements (500, 600, 700, 800) have a longitudinal extension extending substantially perpendicularly to the longitudinal extension of the male parts (420) of the seat panel joint arrangements (410).

13. The chair according to any of claims 8-12, wherein the seat panel joint arrangement (410) comprises at least three male parts (420) and at least three female parts (430), and wherein the at least three male parts (420) and the at least three female parts (430) respectively are arranged to define a polygon.

14. The chair according to any of claim 8-13, wherein at least one male part (420) in the seat panel joint arrangement (400) comprises a locking means in the form of at least one rim (424) extending radially from the envelope surface of the male part (420), and wherein a recess (431) of the corresponding female part (430) in the seat panel joint arrangement (400) comprises at least one corresponding groove (436), whereby in said locking position, the at least one rim (424) of the male part (420) is configured to engage the at least one corresponding groove (436) of the female part (430).

15. The chair according to any of claims 8-14, further comprising a locking means (450) arranged in a lower surface of the seat panel (400), wherein the locking means (450), in a condition when the seat panel (400) has been mounted to the frame (F), engages the frame (F), thereby preventing the seat panel (400) from being displaced in view of the frame (F).

16. The chair according to any of claims 8-15, wherein an upper edge of the second cross-member (200B) that is configured to face the seat panel (400) is provided with an angle α of 2-10 degrees towards the interior of the frame F.

## Patentansprüche

1. Ein Stuhl mit
einem ersten Abschnitt (100A) und einem zweiten Abschnitt (100B), die gegeneinander versetzt sind, um einen Spalt (G) dazwischen zu bilden,
ein erstes Querelement (200A) und ein zweites Querelement (200B) mit ersten und zweiten gegenüberliegenden freien Enden (201A, 202A, 201B, 202B), wobei das erste Querelement (200A) so konfiguriert ist, dass es sich mit seinem ersten freien Ende (201A) mit dem ersten Abschnitt (100A) und mit seinem zweiten freien Ende (202A) mit dem zweiten Abschnitt (100B) verbindet, wodurch der Spalt (G) überbrückt wird, und wobei das zweite Querelement (200B) so konfiguriert ist, dass es sich mit seinem ersten freien Ende (201B) mit dem ersten Abschnitt (100A) und mit seinem zweiten freien Ende (202B) mit dem zweiten Abschnitt (100B) verbindet, wodurch der Spalt (G) überbrückt wird,
eine erste Verbindungsanordnung (500), die so konfiguriert ist, dass sie das erste freie Ende (201A) des ersten Querelements (200A) an dem ersten Abschnitt (100A) befestigt, eine zweite Verbindungsanordnung (600), die so konfiguriert ist, dass sie das zweite freie Ende (202A) des ersten Querelements (200A) an dem zweiten Abschnitt (100B) befestigt, eine dritte Verbindungsanordnung (700), die so konfiguriert ist, dass sie das erste freie Ende (201B) des zweiten Querelements (200B) an dem ersten Abschnitt (100A) befestigt, und eine vierte Verbindungsanordnung (800), die so konfiguriert ist, dass sie das zweite freie Ende (202B) des zweiten Querelements (200B) an dem zweiten Abschnitt (100B) befestigt,
wobei jede der ersten und zweiten Verbindungsanordnungen (500, 600) umfasst:
mindestens zwei männliche Teile (520), die entweder an einem freien Ende (201A) des ersten Querelements (200A) oder an dem jeweiligen Abschnitt (100) angeordnet sind, und
mindestens zwei Aufnahmeteile (537, 538), die auf dem anderen jeweiligen Abschnitt (100B, 100A) und dem ersten Querelement (200A) angeordnet sind;
wobei jede der dritten und vierten Verbindungsanordnungen (700, 800) umfasst:
mindestens zwei männliche Teile (720), die entweder an einem freien Ende (201B, 202B) des zweiten Querelements (200B) oder an dem jeweiligen Abschnitt (100A, 100B) angeordnet sind; und
mindestens zwei Aufnahmeteile (737), die auf dem anderen jeweiligen Abschnitt (100A, 100B) und dem zweiten Querelement (200B) angeordnet sind,
wobei jedes männliche Teil (520, 720) durch einen Dübel (521, 721) gebildet ist, der sich in einer Längsrichtung erstreckt und ein freies Ende aufweist, das von einer Oberfläche des freien Endes (201A, 202A, 201B, 202B) des ersten oder zweiten Querelements (200A, 200B) oder einer ersten Fläche (107) des jeweiligen Abschnitts (100A, 100B) abgewandt ist, wobei der Dübel (521, 721) eine Verriegelungseinrichtung in Form mindestens eines Randes (524, 724) aufweist, der sich radial von der Mantelfläche des Dübels (521, 721) erstreckt; und
wobei jedes Aufnahmeteil (537, 538, 737) durch eine Aussparung (531, 539, 731) in dem jeweiligen Abschnitt (100A, 100B) oder in der Oberfläche des freien Endes (201A, 202A, 201B, 202B) des ersten oder zweiten Querträgers (200A, 200B) gebildet ist, wobei die Aussparung (531, 539, 731) eine längliche Erstreckung und einen Verriegelungsabschnitt (533, 733) aufweist und ferner mindestens eine Nut (536, 736) umfasst, die der Form des mindestens einen Randes (524, 724) entspricht,
wobei das erste und das zweite Querelement (200A, 200B) so konfiguriert sind, dass sie relativ zu dem ersten und dem zweiten Abschnitt (100A, 100B) bewegt werden, so dass die Dübel (521, 721) entlang der länglichen Erstreckung der Aussparungen (531, 539, 731) in eine Verriegelungsposition in den Verriegelungsabschnitten (533, 733) bewegt werden, in welcher Verriegelungsposition der mindestens eine Rand (524, 724) des Dübels (521, 721) in die mindestens eine Nut (536, 736) der Aussparung(531, 539, 731) eingreift,
wobei die Abstände zwischen den Längsmittellinien (L1) der männlichen Teile (520) der ersten und zweiten Verbindungsanordnungen (500, 600) und die Abstände zwischen den Längsmittellinien der männlichen Teile (720) der dritten und vierten Verbindungsanordnungen (700, 800) kleiner sind als das Achtfache der Längserstreckung (L2) eines jeden männlichen Teils (520, 720).

2. Stuhl nach Anspruch 1, wobei die männlichen Teile (520) der ersten und zweiten Verbindungsanordnungen (500, 600) in den ersten und zweiten freien Enden (201A, 202A) des ersten Querelements (200A) angeordnet sind, und wobei die weiblichen Teile (537, 538) der ersten und zweiten Verbindungsanordnungen (500, 30 600) in den ersten und zweiten Abschnitten (100A, 100B) des Stuhls angeordnet sind.

3. Stuhl nach einem der Ansprüche 1 bis 3, wobei ein Aufnahmeteil (537) der ersten bzw. zweiten Verbindungsanordnung (500, 600) durch eine in der ersten Fläche (107) des ersten und zweiten Abschnitts (100A, 100B) des Stuhls ausgebildete Aussparung (531) gebildet wird, und wobei die Aussparung (531) einen Einführabschnitt (532) und einen Verriegelungsabschnitt (533) aufweist,
und wobei ein Aufnahmeteil (538) der ersten bzw. zweiten Verbindungsanordnung (500, 600) durch eine Aussparung (539) mit einer Öffnung (540) gebildet wird, die in einer zweiten Fläche (108) des ersten und zweiten Abschnitts (500, 600) des Stuhls ausgebildet ist, und
wobei die erste und die zweite Fläche (107, 108) einen Winkel zueinander bilden.

4. Stuhl nach einem der vorhergehenden Ansprüche, wobei die männlichen Teile (720) der dritten und vierten Verbindungsanordnungen (700, 800) im ersten und im zweiten freien Ende (201B, 202B) des zweiten Querelements (200A) angeordnet sind, und wobei die Aufnahmeteile (737) der dritten und vierten Verbindungsanordnungen (700, 800) in den ersten und in den zweiten Abschnitten (100A, 100B) angeordnet sind.

5. Stuhl nach einem der vorhergehenden Ansprüche, wobei das erste und/oder das zweite Querelement (200A, 200B) entweder männliche Teile (720) an ihren beiden freien Enden (201A, 202A; 201B, 202B) oder Aufnahmeteile (737) an ihren beiden freien Enden (201A, 202A; 201B, 202B) aufweisen.

6. Stuhl nach einem der vorhergehenden Ansprüche, wobei der erste und der zweite Abschnitt (100A, 100B) zusammen mit dem ersten und/oder dem zweiten Querelement (200A, 200B) zusammen einen Rahmen (F) bilden.

7. Stuhl nach einem der vorhergehenden Ansprüche, wobei der Abstand zwischen den Längsmittellinien (L1) der männlichen Teile (520) der ersten und zweiten Verbindungsanordnungen (500, 600) und/oder der männlichen Teile (720) der dritten und vierten Verbindungsanordnungen (700, 800) kleiner als das Sechsfache der Längserstreckung (L2) jedes männlichen Teils (520, 720) ist.

8. Stuhl nach einem der vorhergehenden Ansprüche, der ferner eine Sitzplatte (400) umfasst, die so konfiguriert ist, dass sie mit dem ersten Abschnitt (100A) und dem zweiten Abschnitt (100B) verbunden wird, wodurch der Spalt (G) überbrückt wird,
eine Sitzplattenverbindungsanordnung (410), die so konfiguriert ist, dass sie die Sitzplatte (400) an einer zweiten Fläche (108) des ersten und des zweiten Abschnitts (100A, 100B) befestigt, wobei die zweite Fläche (108) einen Winkel mit der ersten Fläche (107) des jeweiligen Abschnitts (100A, 100B) bildet,
wobei die Sitzplattenverbindungsanordnung (410) umfasst:
mindestens zwei männliche Teile (420), die beide entweder auf einer Hauptfläche der Sitzplatte (400) oder beide auf dem ersten und dem zweiten Abschnitt (100A, 100B) angeordnet sind, wobei mindestens eines der männlichen Teile (420) auf jedem Abschnitt (100A, 100B) angeordnet ist; und
mindestens zwei Aufnahmeteile (430), die beide an dem anderen der Hauptfläche der Sitzplatte (400) und des jeweiligen ersten und zweiten Abschnitts (100a, 100B) angeordnet sind,
wobei jedes der männlichen Teile (420) durch einen Dübel (421) gebildet ist, der sich in einer Längsrichtung erstreckt und ein freies Ende (422) aufweist, das von dem ersten und zweiten Abschnitt (100A, 100B) oder von der Hauptfläche der Sitzplatte (400) weg weist,
wobei jedes der Aufnahmeteile (430) durch eine Aussparung (431) in der Hauptfläche der Sitzplatte (400) oder in dem ersten und zweiten Abschnitt (100A, 100B) gebildet ist,
wobei die Aussparung (431) eine längliche Erstreckung zwischen einem Einführabschnitt (432) und einem Verriegelungsabschnitt (433) aufweist, wodurch der erste und der zweite Abschnitt (100A, 100B) und die Sitzplatte (400) so konfiguriert sind, dass sie relativ zueinander bewegt werden können, so dass die Dübel (421) zunächst relativ zu den Aussparungen (431) in der Längsrichtung des jeweiligen Dübels (421) in den Einführabschnitt (432) bewegt werden, und die Dübel (421) danach entlang der länglichen Erstreckung der Aussparung (431) in den Verriegelungsabschnitt (433) bewegt werden.

9. Stuhl nach Anspruch 8, wobei die männlichen Teile (420) der Sitzplattenverbindungsanordnung (410) in den ersten und zweiten Abschnitten (100A, 100B) angeordnet sind, und wobei die Aufnahmeteile (430) der Sitzplattenanordnung (410) in der Hauptfläche der Sitzplatte (400) angeordnet sind.

10. Stuhl nach einem der Ansprüche 8 oder 9, wobei die Aussparung (431) jedes Aufnahmeteils (430) der Sitzplattenverbindungsanordnung (410) eine längliche Erstreckung in einer Richtung quer zu dem Spalt (G) zwischen dem ersten und dem zweiten Abschnitt (100A, 100B) aufweist.

11. Stuhl nach einem der Ansprüche 8 oder 10, wobei die Aussparungen (431) jedes Aufnahmeteils (430) der Sitzplattenverbindungsanordnung (410) in einer zweiten Fläche (108) des ersten und zweiten Abschnitts (100A, 100B) angeordnet sind, wobei die zweite Fläche (108) einen Winkel a zu der ersten Fläche (107) bildet.

12. Stuhl nach einem der vorhergehenden Ansprüche und einschließlich mindestens Anspruch 8, wobei die männlichen Teile der ersten, zweiten, dritten und vierten Verbindungsanordnungen (500, 600, 700, 800) eine Längserstreckung aufweisen, die sich im Wesentlichen senkrecht zur Längserstreckung der männlichen Teile (420) der Sitzplattenverbindungsanordnung (410) erstreckt.

13. Stuhl nach einem der Ansprüche 8 bis 12, wobei die Sitzplattenverbindungsanordnung (410) mindestens drei männliche Teile (420) und mindestens drei Aufnahmeteile (430) umfasst, und wobei die mindestens drei männlichen Teile (420) und die mindestens drei Aufnahmeteile (430) jeweils so angeordnet sind, dass sie ein Vieleck bilden.

14. Stuhl nach einem der Ansprüche 8 bis 13, wobei mindestens ein männliches Teil (420) in der Sitzplattenverbindungsanordnung (400) ein Verriegelungsmittel in Form von mindestens einem Rand (424) aufweist, der sich radial von der Hüllfläche des männlichen Teils (420) erstreckt, und wobei eine Aussparung (431) des entsprechenden Aufnahmeteils (430) in der Sitzplattenverbindungsanordnung (400) mindestens eine entsprechende Nut (436) aufweist, wodurch in der Verriegelungsposition der mindestens eine Rand (424) des männlichen Teils (420) so gestaltet ist, dass er in die mindestens eine entsprechende Nut (436) des Aufnahmteils (430) eingreift.

15. Stuhl nach einem der Ansprüche 8 bis 14, ferner umfassend eine Verriegelungseinrichtung (450), die in einer unteren Fläche der Sitzplatte (400) angeordnet ist, wobei die Verriegelungseinrichtung (450) in einem Zustand, in dem die Sitzplatte (400) an dem Rahmen (F) angebracht wurde, mit dem Rahmen (F) in Eingriff steht, wodurch verhindert wird, dass die Sitzplatte (400) in Bezug auf den Rahmen (F) verschoben wird.

16. Stuhl nach einem der Ansprüche 8-15, wobei eine obere Kante des zweiten Querelements (200B), die so konfiguriert ist, dass sie der Sitzplatte (400) zugewandt ist, mit einem Winkel a von 2-10 Grad in Richtung des Inneren des Rahmens F versehen ist.

## Revendications

1. Chaise comprenant
une première section (100A) et une seconde section (100B) mutuellement décalées l'une par rapport à l'autre pour former un espace (G) entre elles,
une première traverse (200A) et une seconde traverse (200B) présentant des première et seconde extrémités libres opposées (201A, 202A, 201B, 202B), la première traverse (200A) étant configurée pour se raccorder avec sa première extrémité libre (201A) à la première section (100A) et avec sa seconde extrémité libre (202A) à la seconde section (100B), comblant ainsi l'espace (G), et la seconde traverse (200B) étant configurée pour se raccorder avec sa première extrémité libre (201B) à la première section (100A) et avec sa seconde extrémité libre (202B) à la seconde section (100B), comblant ainsi l'espace (G),
un premier agencement d'articulation (500) configuré pour fixer la première extrémité libre (201A) de la première traverse (200A) à la première section (100A), un deuxième agencement d'articulation (600) configuré pour fixer la seconde extrémité libre (202A) de la première traverse (200A) à la seconde section (100B), un troisième agencement d'articulation (700) configuré pour fixer la première extrémité libre (201B) de la seconde traverse (200B) à la première section (100A), et un quatrième agencement d'articulation (800) configuré pour fixer la seconde extrémité libre (202B) de la seconde traverse (200B) à la seconde section (100B),
dans laquelle chacun des premier et deuxième agencements d'articulation (500, 600) comprend :
au moins deux parties mâles (520) qui sont agencées soit sur une extrémité libre (201A) de la première traverse (200A) soit sur la section respective (100A, 100B) ; et
au moins deux parties femelles (537, 538) qui sont agencées sur l'autre de la section respective (100B, 100A) et de la première traverse (200A) ;
dans laquelle chacun des troisième et quatrième agencements d'articulation (700, 800) comprend :
au moins deux parties mâles (720) qui sont agencées soit sur une extrémité libre (201B, 202B) de la seconde traverse (200B) soit sur la section respective (100A, 100B) ; et au moins deux parties femelles (737) qui sont agencées sur l'autre de la section respective (100A, 100B) et de la seconde traverse (200B),
dans laquelle chaque partie mâle (520, 720) est formée par une cheville (521, 721) s'étendant dans une direction longitudinale et présentant une extrémité libre orientée à l'opposé d'une surface de l'extrémité libre (201A, 202A, 201B, 202B) de la première ou seconde traverse (200A, 200B) ou d'une première surface (107) de la section respective (100A, 100B), ladite cheville (521, 721) comprenant un moyen de verrouillage sous la forme d'au moins un rebord (524, 724) s'étendant radialement à partir de la surface d'enveloppe de la cheville (521, 721) ; et
dans laquelle chaque partie femelle (537, 538, 737) est formée par un évidement (531, 539, 731) dans la section respective (100A, 100B) ou dans la surface de l'extrémité libre (201A, 202A, 201B, 202B) de la première ou seconde traverse (200A, 200B), l'évidement (531, 539, 731) présentant une extension allongée et une partie de verrouillage (533, 733) et comprenant en outre au moins une rainure (536, 736) correspondant à la forme de l'au moins un rebord (524, 724),
dans laquelle les première et seconde traverses (200A, 200B) sont configurées pour être déplacées par rapport aux première et seconde sections (100A, 100B) de sorte que les chevilles (521, 721) soient déplacées le long de l'extension allongée des évidements (531, 539, 731) vers une position de verrouillage dans les parties de verrouillage (533, 733), dans ladite position de verrouillage, l'au moins un rebord (524, 724) de la cheville (521, 721) venant en prise dans l'au moins une rainure (536, 736) de l'évidement (531, 539, 731),
dans laquelle les distances entre les lignes centrales longitudinales (L1) des parties mâles (520) des premier et deuxième agencements d'articulation (500, 600) et les distances entre les lignes centrales longitudinales des parties mâles (720) des troisième et quatrième agencements d'articulation (700, 800) sont inférieures à huit fois l'extension longitudinale (L2) de chaque partie mâle (520, 720).

2. Chaise selon la revendication 1, dans laquelle les parties mâles (520) des premier et deuxième agencements d'articulation (500, 600) sont agencées dans les première et seconde extrémités libres (201A, 202A) de la première traverse (200A), et dans laquelle les parties femelles (537, 538) des premier et deuxième agencements d'articulation (500, 600) sont agencées dans les première et seconde sections (100A, 100B) de la chaise.

3. Chaise selon l'une quelconque des revendications 1-2, dans laquelle une partie femelle (537) des premier et deuxième agencements d'articulation (500, 600) est formée respectivement par un évidement (531) formé dans la première surface (107) des première et seconde sections (100A, 100B) de la chaise, et dans laquelle ledit évidement (531) présente une partie d'insertion (532) et une partie de verrouillage (533),
et dans laquelle une partie femelle (538) des premier et deuxième agencements d'articulation (500, 600) est formée respectivement par un évidement (539) présentant une bouche (540) formée dans une seconde surface (108) des première et seconde sections (500, 600) de la chaise, et
dans laquelle les première et seconde surfaces (107, 108) forment un angle l'une par rapport à l'autre.

4. Chaise selon l'une quelconque des revendications précédentes, dans laquelle les parties mâles (720) des troisième et quatrième agencements d'articulation (700, 800) sont agencées dans les première et seconde extrémités libres (201B, 202B) de la seconde traverse (200A), et dans laquelle les parties femelles (737) des troisième et quatrième agencements d'articulation (700, 800) sont agencées dans les première et seconde sections (100A, 100B).

5. Chaise selon l'une quelconque des revendications précédentes, dans laquelle les première et/ou seconde traverses (200A, 200B) comprennent soit des parties mâles (720) dans les deux extrémités libres (201A, 202A ; 201B, 202B) de celle-ci, soit des parties femelles (737) dans les deux extrémités libres (201A, 202A ; 201B, 202B) de celle-ci.

6. Chaise selon l'une quelconque des revendications précédentes, dans laquelle les première et seconde sections (100A, 100B) conjointement avec la première et/ou la seconde traverse (200A, 200B) forment ensemble un cadre (F).

7. Chaise selon l'une quelconque des revendications précédentes, dans laquelle la distance entre les lignes centrales longitudinales (L1) des parties mâles (520) des premier et deuxième agencements d'articulation (500, 600) et/ou des parties mâles (720) des troisième et quatrième agencements d'articulation (700, 800) est inférieure à six fois l'extension longitudinale (L2) de chaque partie mâle (520, 720).

8. Chaise selon l'une quelconque des revendications précédentes, comprenant en outre un panneau d'assise (400) configuré pour se raccorder à la première section (100A) et à la seconde section (100B) comblant ainsi l'espace (G),
un agencement d'articulation de panneau d'assise (410) configuré pour fixer le panneau d'assise (400) à une seconde surface (108) des première et seconde sections (100A, 100B), la seconde surface (108) formant un angle avec la première surface (107) de la section respective (100A, 100B),
dans laquelle l'agencement d'articulation de panneau d'assise (410) comprend :
au moins deux parties mâles (420), les deux étant agencées soit sur une surface principale, du panneau d'assise (400), soit les deux étant agencées sur les première et seconde sections (100A, 100B) avec au moins une des parties mâles (420) sur chaque section (100A, 100B) ; et
au moins deux parties femelles (430), les deux étant agencées sur l'autre de la surface principale du panneau d'assise (400) et des première et seconde sections respectives (100a, 100B),
dans laquelle chacune des parties mâles (420) est formée par une cheville (421) s'étendant dans une direction longitudinale et présentant une extrémité libre (422) orientée à l'opposé des première et seconde sections (100A, 100B) ou de la surface principale du panneau d'assise (400), dans laquelle chacune des parties femelles (430) est formée par un évidement (431) dans la surface principale du panneau de siège (400) ou dans les première et seconde sections (100A, 100B), l'évidement (431) présentant une extension allongée entre une partie d'insertion (432) et une partie de verrouillage (433)
dans laquelle les première et seconde sections (100A, 100B) et le panneau d'assise (400) sont configurées pour être déplacées les unes par rapport à l'autre de sorte que les chevilles (421) soient d'abord déplacées par rapport aux évidements (431) dans la direction longitudinale de la cheville (421) respective dans la partie d'insertion (432) et que les chevilles (421) soient ensuite déplacées le long de l'extension allongée de l'évidement (431) dans la partie de verrouillage (433).

9. Chaise selon la revendication 8, dans laquelle les parties mâles (420) de l'agencement d'articulation de panneau d'assise (410) sont agencées dans les première et seconde sections (100A, 100B), et dans laquelle les parties femelles (430) de l'agencement de panneau d'assise (410) sont agencées dans la surface principale du panneau de siège (400).

10. Chaise selon l'une quelconque des revendications 8 ou 9, dans laquelle l'évidement (431) de chaque partie femelle (430) de l'agencement d'articulation de panneau d'assise (410) présente une extension allongée dans une direction transversale de l'espace (G) entre les première et seconde sections (100A, 100B).

11. Chaise selon l'une quelconque des revendications 8 ou 10, dans laquelle les évidements (431) de chaque partie femelle (430) de l'agencement d'articulation de panneau d'assise (410) sont agencés dans une seconde surface (108) des première et seconde sections (100A, 100B), la seconde surface (108) formant un angle α par rapport à la première surface (107).

12. Chaise selon l'une quelconque des revendications précédentes et comportant au moins la revendication 8, dans laquelle les parties mâles des premier, deuxième, troisième et quatrième agencements d'articulation (500, 600, 700, 800) présentent une extension longitudinale s'étendant sensiblement perpendiculairement à l'extension longitudinale des parties mâles (420) des agencements d'articulation de panneau d'assise (410).

13. Chaise selon l'une quelconque des revendications 8 à 12, dans laquelle l'agencement d'articulation de panneau d'assise (410) comprend au moins trois parties mâles (420) et au moins trois parties femelles (430), et dans laquelle les au moins trois parties mâles (420) et les au moins trois parties femelles (430) sont agencées respectivement pour définir un polygone.

14. Chaise selon l'une quelconque des revendications 8 à 13, dans laquelle au moins une partie mâle (420) dans l'agencement d'articulation de panneau d'assise (400) comprend un moyen de verrouillage sous la forme d'au moins un rebord (424) s'étendant radialement à partir de la surface d'enveloppe de la partie mâle (420), et dans laquelle un évidement (431) de la partie femelle (430) correspondante dans l'agencement d'articulation de panneau d'assise (400) comprend au moins une rainure (436) correspondante, moyennant quoi dans ladite position de verrouillage, l'au moins un rebord (424) de la partie mâle (420) est configuré pour venir en prise dans l'au moins une rainure (436) correspondante de la partie femelle (430).

15. Chaise selon l'une quelconque des revendications 8 à 14, comprenant en outre un moyen de verrouillage (450) agencé dans une surface inférieure du panneau d'assise (400), dans laquelle le moyen de verrouillage (450), dans un état où le panneau d'assise (400) a été monté sur le cadre (F), vient en prise dans le cadre (F), empêchant ainsi le panneau d'assise (400) d'être déplacé en vue du cadre (F).

16. Chaise selon l'une quelconque des revendications 8 à 15, dans laquelle un bord supérieur de la seconde traverse (200B) qui est configuré pour faire face au panneau d'assise (400) est doté d'un angle α de 2 à 10 degrés en direction de l'intérieur du cadre F.
